# FASCICULE DE BREVET EUROPEEN

(11) **EP 4 594 078 B1**
(45) Date de publication et mention de la délivrance du brevet: **18.11.2026**
(21) Numéro de dépôt: 23782537.7
(22) Date de dépôt: 29.09.2023
(51) Int. Cl.: B29C 49/04, B29C 49/20, B29C 49/48, B29K 23/00, B29L 31/00, B29C 49/60

(54) **MOULE, MACHINE DE MOULAGE ET PROCÉDÉ DE MOULAGE PAR EXTRUSION-SOUFFLAGE**
FORM, FORMMASCHINE UND VERFAHREN ZUM FORMEN DURCH EXTRUSIONSBLASFORMEN
MOULD, MOULDING MACHINE AND METHOD FOR MOULDING BY EXTRUSION BLOW MOULDING

(30) Priorité: 30.09.2022 BE 202205789
(43) Date de publication de la demande: 06.08.2025
(73) Titulaire: OPmobility C-Power Belgium Research, 1200 Woluwe-Saint-Lambert (BE)
(72) Inventeur: COING, Jean-François, 1200 BRUXELLES (BE)
(74) Mandataire: LLR
(86) Numéro de dépôt international: PCT/EP2023/077009
(87) Numéro de publication internationale: WO 2024/068902

(56) Documents cités:
- US-A1- 2010 092 600
- US-A1- 2012 056 356
- US-A1- 2015 014 897
- US-A1- 2021 283 820

## Description

### DOMAINE TECHNIQUE DE L'INVENTION

La présente invention concerne un moule de fabrication par extrusion-soufflage d'un corps creux de réservoir en matière plastique pour un véhicule automobile à partir d'une paraison, le réservoir comportant au moins un composant interne fixé à l'intérieur de la paraison lors du moulage du corps creux. Plus particulièrement, l'invention concerne un moule comprenant deux parties comportant plusieurs sections délimitant intérieurement une cavité de moule comprenant une surface totale de moulage destinée à reproduire une forme prédéterminée du corps creux à fabriquer.

L'invention concerne également une machine de moulage par extrusion-soufflage d'un corps creux de réservoir en matière plastique pour un véhicule automobile à partir d'une paraison.

L'invention concerne enfin un procédé de moulage par extrusion-soufflage d'un corps creux de réservoir en matière plastique pour un véhicule automobile à partir d'une paraison, le réservoir comportant au moins un composant interne fixé à l'intérieur de la paraison lors du moulage du corps creux.

### ARRIÈRE-PLAN TECHNIQUE DE L'INVENTION

Dans le document WO 2008/138869, la Demanderesse décrit un moule pour la fabrication d'un réservoir à carburant muni d'un composant interne. Les empreintes du moule comprennent plusieurs tiges mobiles, une surface d'appui est prévue à l'extrémité libre de chaque tige mobile pour pousser localement la paraison à l'état fondu et l'amener en contact avec une zone d'un composant interne pour former, par pressage, une fixation du composant interne à l'intérieur de la paraison. Un autre exemple est décrit dans le document US 2014/265052. D'autres moules et procédés de moulage selon l'art antérieur sont décrits dans les documents US2012/056356A1, US2021/283820A1, US2015/014897A1 et US2010/092600A1.

La surface d'appui d'une tige mobile étant limitée par sa section, plus le composant interne possède de zones à fixer et plus il faut prévoir de tiges mobiles. L'extrémité libre d'une tige mobile présente typiquement une surface d'appui d'environ 4000 mm², ce qui représente moins de 2 % de la surface totale du moule. Avec six tiges mobiles, c'est moins de 12 % de la surface totale du moule. De même, plus l'ensemble de composants internes contient de composants internes et plus il faut prévoir de tiges mobiles. Ceci n'est pas satisfaisant car la conception du moule devient plus complexe et sa fabrication plus coûteuse.

Par ailleurs, la Demanderesse a constaté qu'à l'endroit où la paraison est poussée par une tige mobile vers une zone d'un composant interne, la matière de la paraison est étirée vers cette zone de fixation de sorte que la paraison a une épaisseur réduite au niveau de la fixation. Ceci n'est pas souhaitable car une réduction de l'épaisseur de la matière à l'endroit de la fixation peut provoquer un défaut de fixation du composant interne. En outre, la réduction d'épaisseur constatée au niveau de la fixation s'accompagne souvent d'une autre déformation. Cette autre déformation est une ondulation de la matière autour de la fixation. Ceci n'est pas souhaitable non plus car plus le réservoir subit de déformations pendant sa fabrication et moins la résistance mécanique du réservoir obtenu est bonne. Les risques précités sont évidemment aggravés par la multiplication des tiges mobiles.

La Demanderesse a également constaté que la multiplication des tiges mobiles entraîne une dégradation de l'homogénéité de température de refroidissement du moule du fait que les tiges mobiles ne font pas parties du circuit de refroidissement du moule. Ceci n'est pas satisfaisant car une dégradation de l'homogénéité de température de refroidissement du moule est susceptible de provoquer des déformations du réservoir pendant sa fabrication.

Un autre inconvénient du moule précité est que la multiplication des tiges mobiles entraîne la multiplication des mécanismes de mise en mouvement des tiges mobiles ce qui conduit à augmenter la taille et la complexité de la machine de moulage par extrusion-soufflage équipée d'un tel moule.

On comprend dès lors que le coût de fabrication d'un réservoir muni d'un (ou plusieurs) composant(s) interne(s) augmente avec le nombre de tiges mobiles nécessaires pour fixer le (ou les) composant(s) interne(s).

Par ailleurs, le document WO 2008/138869 montre le processus de fabrication d'un réservoir à carburant du type « réservoir à selle » (« saddle tank » en langue anglaise) comprenant une dépression (aussi appelée « tunnel » du réservoir) prévue pour le passage d'un arbre de transmission d'un véhicule automobile équipé d'un tel réservoir. Lors de la fabrication de ce type réservoir, la paraison est pressée entre les deux empreintes du moule afin de réduire un volume prédéterminé à l'intérieur de la paraison pour former ultérieurement la dépression du réservoir à selle. Le volume prédéterminé à l'intérieur de la paraison se réduit pendant la fermeture du moule portant les deux empreintes du moule. Autrement dit, la dépression se forme nécessairement en même temps que le reste du réservoir à selle. Ceci n'est pas satisfaisant en termes de flexibilité du processus de fabrication car il n'est pas toujours souhaitable de former la dépression en même temps que le reste du réservoir à selle. En effet, dans le document WO 2008/138869, le composant interne est porté par un support qui doit être escamoté avant la fermeture complète du moule afin d'éviter une interférence entre le moule et le support. Ainsi, le processus de fabrication décrit dans le document WO 2008/138869 ne permet pas de fixer un composant interne qui ne serait, par exemple, localisé que dans la partie supérieure du moule car dans ce cas il faudrait fermer le moule sur le support ce qui conduirait à la destruction du moule et/ou du support.

### RÉSUME DE L'INVENTION

L'invention a notamment pour but de remédier aux inconvénients précités en fournissant un moule garantissant une fabrication sans déformation et à moindre coût d'un réservoir comportant un (ou plusieurs) composant(s) interne(s), ceci indépendamment du nombre de fixations du (ou des) composant(s) interne(s) à l'intérieur de la paraison, tout en offrant une flexibilité du processus de fabrication du réservoir.

À cet effet, l'invention se rapporte à un moule de fabrication par extrusion-soufflage d'un corps creux de réservoir en matière plastique pour un véhicule automobile à partir d'une paraison, le réservoir comportant au moins un composant interne fixé à l'intérieur de la paraison lors du moulage du corps creux, le moule comprenant deux parties déplaçables l'une par rapport à l'autre délimitant intérieurement, lorsqu'elles sont fermées l'une contre l'autre, une surface totale de moulage destinée à reproduire une forme prédéterminée du corps creux à fabriquer, au moins une des parties du moule comporte :
- au moins une première section ayant une première surface de moulage d'une première portion du corps creux à fabriquer, ladite première surface de moulage comporte au moins une région d'appui primaire configurée pour former, par pressage, une zone de fixation dudit au moins un composant interne à l'intérieur de la paraison,
- une deuxième section ayant une deuxième surface de moulage d'une deuxième portion du corps creux à fabriquer, ladite deuxième section de la partie du moule est mobile par rapport à la au moins une première section associée de la partie du moule au moins entre une position de fermeture intermédiaire et une position de fermeture finale des parties du moule, et
- au moins une troisième section ayant une troisième surface de moulage d'une troisième portion du corps creux à fabriquer, ladite troisième surface de moulage comporte au moins une région d'appui secondaire, ladite au moins une troisième section de la partie du moule est mobile par rapport à la au moins une première section associée de la partie du moule au moins entre une position intermédiaire et une position finale dans laquelle la au moins une région d'appui secondaire est configurée pour réduire, par pressage, un volume prédéterminé à l'intérieur de la paraison.

Avantageusement selon l'invention, le moule permet de fixer un ou plusieurs composants internes sans faire appel à plusieurs tiges mobiles, ces dernières étant remplacées par la au moins une première section de moule qui a une surface de moulage suffisamment étendue pour pouvoir appuyer la paraison contre plusieurs zones à fixer du (ou des) composant(s) interne(s) en même temps.

Outre le gain en termes de coût, l'invention permet d'éviter de déformer localement la matière de la paraison lors de la mise en contact de celle-ci avec une zone à fixer du fait que la première surface de moulage s'étend entre, c'est-à-dire notamment comprend, différentes zones de fixation du (ou des) composant(s) interne(s) avec l'intérieur de la paraison. Grâce à cette disposition, l'épaisseur de la matière à l'endroit de chaque zone de fixation n'est pas réduite et l'ondulation de la matière autour de cette zone de fixation est évitée.

Un autre avantage du moule selon l'invention est qu'il permet d'éviter d'augmenter la taille et la complexité de la machine de moulage par extrusion-soufflage équipée d'un tel moule, ceci quels que soient le nombre de zones de fixation et le nombre de composants internes du futur réservoir.

Un autre avantage du moule selon l'invention est qu'il permet de réduire, par pressage, en utilisant la au moins une troisième section du moule, un volume prédéterminé à l'intérieur de la paraison indépendamment de la fermeture du moule. Ainsi, la déformation de la paraison lors de la réduction du volume prédéterminé à l'intérieur de la paraison est, à l'endroit de la réduction, contrôlée de manière indépendante des déformations de la paraison subies en d'autres endroits de la paraison. Ceci est particulièrement avantageux s'agissant d'un moule de fabrication par extrusion-soufflage d'un corps creux de « réservoir à selle » en matière plastique pour un véhicule automobile à partir d'une paraison. En effet, grâce à l'invention, il n'est pas nécessaire de former la dépression du réservoir à selle en même temps que le reste du réservoir à selle. Ainsi, la déformation de la paraison réalisée par la troisième section du moule lors de la formation de la dépression du réservoir à selle est, à l'endroit où se forme la dépression, contrôlée de manière indépendante des déformations de la paraison subies en d'autres endroits de la paraison. De plus, le fait de fixer le au moins un composant interne avant de former la dépression du réservoir à selle permet de fixer au moins un composant interne qui n'est localisé que dans la partie supérieure du moule. En effet, en formant la dépression du réservoir après la fixation du au moins un composant interne et pas en même temps, on supprime la possibilité d'interférence entre le moule et le support du au moins un composant interne.

L'invention peut également comporter l'une ou plusieurs des caractéristiques optionnelles suivantes, prises seules ou en combinaison.

La première surface de moulage de la partie du moule comporte plusieurs régions d'appui primaire et est configurée afin que les régions d'appui primaire forment en même temps, par pressage, plusieurs zones de fixation dudit au moins un composant interne à l'intérieur de la paraison. Ainsi, la première surface de moulage de la partie du moule permet de fixer un ou plusieurs composants internes, chaque composant interne ayant plusieurs zones de fixation. De plus, la première surface de moulage de la partie du moule peut être construite de manière modulaire.

La première surface de moulage de la partie du moule peut être configurée pour s'étendre selon une surface circonscrite contenant les régions d'appui primaire associées à la partie du moule. Ainsi, chaque partie comportant une première surface de moulage présente une surface unique vers la paraison en position de fermeture intermédiaire afin de fixer la paraison, grâce aux différentes régions d'appui primaire distinctes de la première surface de moulage, selon plusieurs zones de fixation prédéterminées ou toutes les zones de fixation dudit au moins un composant interne de la partie du moule en même temps.

La surface circonscrite de la première surface de moulage de la partie du moule peut comporter une distance de marge prédéterminée au moins autour des régions d'appui primaire dudit au moins un composant interne associées à la partie du moule afin de limiter les ondulations de la matière autour de chaque zone de fixation. On comprend ainsi que la première surface de moulage comporte une surface unique plus étendue autour des zones de fixation dudit au moins un composant interne afin d'éviter une différence de relief trop prononcée à proximité des zones de fixation dudit au moins un composant interne à l'intérieur de la paraison. La distance de marge prédéterminée au moins autour des régions d'appui primaire peut être comprise entre 1 mm et 60 mm.

La surface circonscrite de la première surface de moulage d'au moins une des parties de moule est au moins égale à 15 % de la surface totale de moulage. Il est immédiat que, suivant le mode de réalisation, c'est-à-dire si une seule partie du moule ou les deux parties du moule comporte(nt) au moins une première section, le pourcentage total de la au moins une première section de moule est respectivement au moins égale à 15 % ou au moins égale à 30 % de la surface totale de moulage. De préférence, la surface circonscrite de la première surface de moulage d'au moins une des parties de moule est comprise entre 20 % et 40 % de la surface totale de moulage. Selon les modes de réalisation, la surface circonscrite de la première surface de moulage d'au moins une des parties de moule est par exemple égale à 20 %, 21 %, 22 %, 23 %, 24 %, 25 %, 26 %, 27 %, 28 %, 29 %, 30 %, 31 %, 32 %, 33 %, 34 %, 35 %, 36 %, 37 %, 38 %, 39 % ou 40 % de la surface totale de moulage.

La région d'appui secondaire ou au moins une des régions d'appui secondaire est configurée pour, lorsque la troisième section de la partie de moule est en position finale, mettre en contact deux régions opposées de la paraison de manière à les souder localement l'une à l'autre. Il est ainsi possible de facilement souder localement deux régions opposées de la paraison lorsque cela est nécessaire, par exemple afin de renforcer localement le réservoir ou de créer une cloison anti-bruit. Cette soudure locale est parfois désignée par les expressions anglaises « kiss off » ou « kiss point ». De préférence, chaque partie de moule comprend au moins une troisième section ayant au moins une région d'appui secondaire, les régions d'appui secondaire étant configurées pour, lorsque les troisièmes sections respectives de chaque partie de moule sont en position finale, presser entre elles deux régions opposées de la paraison de manière à les souder localement l'une à l'autre.

La troisième surface de moulage de la partie du moule comporte plusieurs régions d'appui secondaire. Ainsi, la troisième surface de moulage de la partie du moule peut être construite de manière modulaire.

La troisième surface de moulage de la partie du moule est configurée afin que les régions d'appui secondaire forment en même temps, par pressage, plusieurs zones de fixation d'au moins un composant interne à l'intérieur de la paraison, à l'endroit de la réduction du volume prédéterminé à l'intérieur de la paraison. Ainsi, la troisième surface de moulage de la partie du moule permet de fixer un ou plusieurs composants internes, chaque composant interne ayant une ou plusieurs zones de fixation.

La troisième surface de moulage de la partie du moule est configurée afin que les régions d'appui secondaire forment en même temps, par pressage, plusieurs zones de fixation de la paraison à elle-même, à l'intérieur de la paraison, à l'endroit de la réduction du volume prédéterminé à l'intérieur de la paraison. Ainsi, la troisième surface de moulage de la partie du moule permet de créer un réservoir dans lequel une paroi est fixée sur une paroi opposée.

La au moins une troisième section de la partie du moule est divisée en plusieurs sous-sections séparées les unes des autres et chaque région d'appui secondaire est portée par une sous-section de la au moins une troisième section. Ainsi, les plusieurs régions d'appui secondaire peuvent être rendues indépendantes les unes des autres.

Les sous-sections de la au moins une troisième section sont mobiles les unes par rapport aux autres entre une position intermédiaire et la position finale. Ainsi, la déformation de la paraison lors de la réduction du volume prédéterminé à l'intérieur de la paraison est mieux contrôlée à l'endroit de la réduction et l'étirement de la paraison est limitée.

Selon un premier mode de réalisation, chaque partie du moule peut comporter au moins une première section, une deuxième section et au moins une troisième section. Selon un deuxième mode de réalisation, une seule des parties du moule comporte au moins une première section, une deuxième section et au moins une troisième section. Typiquement, dans le deuxième mode de réalisation, la première partie du moule peut comporter au moins une première section, une deuxième section et au moins une troisième section, la deuxième partie du moule peut comporter une section unique monobloc.

Dans la position de fermeture finale, la au moins une première section de moule de chaque partie du moule est préférentiellement entourée par sa deuxième section associée de la partie du moule. Ainsi, ledit au moins un composant interne est entièrement enfermé dans le corps creux.

Dans la position de fermeture finale, la au moins une troisième section de moule de chaque partie du moule est préférentiellement entourée par sa au moins une première section associée de la partie du moule. Ainsi, le moule est plus compact.

Dans le premier mode de réalisation, la au moins une première section de moule de chaque partie du moule peut comprendre au moins une région d'appui primaire configurée pour appuyer la paraison contre ledit même au moins un composant interne afin de former au moins deux zones de fixation différentes dudit même au moins un composant interne pour fixer ledit même au moins un composant interne à l'intérieur de la paraison lors du moulage du corps creux. On comprend qu'au moins une région d'appui primaire de la au moins une première section de la première partie du moule peut ainsi être alignée, c'est-à-dire à l'aplomb, avec au moins une partie d'une région d'appui primaire de la au moins une première section de la deuxième partie du moule afin de fixer deux régions sensiblement opposées du composant interne en même temps en deux régions distinctes de l'intérieur de la paraison. Ainsi, les premières sections de moule agissent comme un étau qui enserre ledit au moins un composant interne.

Quel que soit le mode de réalisation, la au moins une première et/ou troisième section de la partie du moule peut comprendre, comme notamment dans une des régions d'appui primaire et/ou secondaire, au moins un élément d'aspiration destiné à aspirer la paraison lors du moulage du corps creux. Ainsi, la paraison est mieux plaquée sur la première et/ou troisième surface de moulage, ce qui évite aussi la déformation locale de la paraison.

La au moins une première et/ou troisième section de la partie du moule peut comprendre un élément choisi parmi un élément de préhension, un élément de chauffage et un élément combiné de préhension et de chauffage d'une pièce, qui peut être ou non ledit au moins un composant interne, destinée à être moulée avec la première et/ou troisième portion du corps creux. Ainsi, il est possible de lier une pièce à la première et/ou troisième portion du corps creux lors de son moulage. Dans un exemple, l'élément de préhension est une pince ou un élément d'aspiration et l'élément de chauffage est un chauffeur électrique. Dans un exemple, la pièce est une attache métallique ou un renfort fibreux. Dans un autre exemple, l'élément de chauffage est un chauffeur hydraulique.

La au moins une première et/ou troisième section de la partie du moule peut comprendre un outil de soufflage destiné à introduire un gaz sous pression à l'intérieur de la paraison. Dans un exemple, l'outil de soufflage est une aiguille de soufflage. Dans la mesure où un outil de soufflage est nécessaire, cette disposition permet d'éviter de placer un outil de soufflage dans la deuxième section de moule ce qui aurait pour conséquence de dégrader les performances évaporatives et mécaniques du réservoir obtenu, ainsi que d'augmenter les risques de déformations subies par le réservoir pendant sa fabrication.

La au moins une première et/ou troisième section de la partie du moule peut comprendre un premier dispositif de refroidissement destinée à refroidir la première et/ou troisième portion du corps creux. Ceci permet d'éviter toute déformation de la première et/ou troisième portion du corps creux pendant sa fabrication.

La deuxième section de la partie du moule peut comprendre un deuxième dispositif de refroidissement destinée à refroidir la deuxième portion du corps creux. Ceci permet d'éviter toute déformation de la deuxième portion du corps creux pendant sa fabrication.

Avantageusement, le premier dispositif de refroidissement et le deuxième dispositif de refroidissement font partie d'un même circuit de refroidissement. Ceci permet d'homogénéiser la température du moule.

La au moins une première et/ou troisième section de la partie du moule peut comprendre plusieurs premières et/ou troisièmes sections afin d'augmenter la modularité du moule.

L'invention se rapporte également à une machine de moulage par extrusion-soufflage d'un corps creux de réservoir en matière plastique pour un véhicule automobile à partir d'une paraison, **caractérisée en ce que** la machine comprend un moule tel que présenté plus haut. Ainsi, la machine de moulage bénéficie de tous les avantages associés au moule.

L'invention se rapporte enfin à un procédé de moulage par extrusion-soufflage d'un corps creux de réservoir en matière plastique pour un véhicule automobile à partir d'une paraison, le réservoir comportant au moins un composant interne fixé à l'intérieur de la paraison lors du moulage du corps creux, **caractérisé en ce que** le procédé comprend les étapes suivantes :
a) introduire ledit au moins un composant interne et la paraison à l'état fondu dans un moule ouvert en deux parties de manière à ce que ledit au moins un composant interne soit entouré par la paraison, au moins une partie du moule comprenant au moins une première section, une deuxième section et au moins une troisième section délimitant intérieurement respectivement une première surface de moulage, une deuxième surface de moulage et une troisième surface de moulage d'une surface totale de moulage du moule,
b) déplacer la au moins une première section de la partie du moule pour amener le moule dans une position de fermeture intermédiaire dans laquelle la au moins une première section de la partie du moule appuie la paraison contre ledit au moins un composant interne afin de fixer ledit au moins un composant interne à l'intérieur de la paraison, la première surface de moulage étant configurée pour former en même temps, par pressage, plusieurs zones de fixation dudit au moins un composant interne à l'intérieur de la paraison,
c) déplacer la deuxième section de la partie du moule par rapport à la au moins une première section de la partie du moule pour amener le moule dans une position de fermeture finale dans laquelle les deux parties du moule sont fermées l'une contre l'autre en délimitant intérieurement la surface totale de moulage destinée à reproduire une forme prédéterminée du corps creux à fabriquer,
d) déplacer la au moins une troisième section de la partie du moule par rapport à la au moins une première section de la partie du moule pour amener la au moins une troisième section dans une position dans laquelle la troisième surface de moulage presse la paraison afin de réduire un volume prédéterminé à l'intérieur de la paraison,
e) réaliser un soufflage de la paraison en plaquant ladite paraison sur la surface totale de moulage du moule à l'aide d'un gaz sous pression,
f) ouvrir le moule pour sortir le corps creux fabriqué.

Les étapes a) à f) du procédé de moulage selon l'invention sont de préférence réalisées successivement.

Le procédé de moulage selon l'invention utilise de préférence une paraison extrudée. Selon l'invention, chaque composant interne est entouré par la paraison, soit en extrudant la paraison autour de chaque composant interne, soit en insérant chaque composant interne dans la paraison. Dans le cas où le composant interne est inséré dans la paraison, cette dernière peut être amenée dans le moule ouvert au moyen d'un robot.

La paraison extrudée peut être étirée pour permettre l'insertion du composant interne sans risque de collision avec la paraison, ceci peut se faire par un dispositif adéquat. Dans un exemple, le procédé de moulage selon l'invention utilise un outil permettant d'étirer la paraison pour la maintenir ouverte comme, par exemple, du type référencé 6 dans le document WO 2008/138869. Cet outil peut consister en des pinces, mâchoires ou mors susceptible d'agripper les bords de la paraison et de les maintenir écartés. Cet outil peut être piloté par un robot.

L'invention peut également comporter l'une ou plusieurs des caractéristiques optionnelles suivantes, prises seules ou en combinaison.

De préférence, on introduit un gaz sous pression à l'intérieur de la paraison pour effectuer un pré-soufflage de ladite paraison entre l'étape a) et l'étape b). Une telle introduction de gaz peut être effectuée selon l'étape b) du document WO 2008/138869 afin notamment d'expanser la paraison en homogénéisant l'épaisseur de la paraison. L'introduction de gaz à plus faible pression que pour l'étape e) peut être obtenue de différentes manières connues par l'homme du métier. À titre d'exemple nullement limitatif, l'introduction de gaz pour le pré-soufflage peut être obtenue par l'outil de soufflage utilisé pour réaliser l'étape e), par un outil dédié monté sur le moule, par une tige creuse de support de composant interne ou par une buse comprise dans la tête d'extrusion de la paraison.

À l'étape b), ledit au moins un composant interne peut être fixé à l'intérieur de la paraison par soudage, bouterollage ou ancrage mécanique.

Dans un mode de réalisation préféré du procédé selon l'invention, la au moins une troisième section de la partie du moule est divisée en plusieurs sous-sections mobiles les unes par rapport aux autres entre une position intermédiaire et une position finale et la troisième surface de moulage comporte plusieurs régions d'appui secondaire, chaque région d'appui secondaire étant portée par une sous-section de la au moins une troisième section. Grâce à cette disposition, chaque région d'appui secondaire, dans une position intermédiaire, peut être amenée au contact de la paraison pour empêcher, lors d'une étape de pré-soufflage par exemple, la paraison de gonfler et s'étirer de manière incontrôlée à l'endroit où une réduction, par pressage, d'un volume prédéterminé à l'intérieur de la paraison aura lieu. De plus, chaque région d'appui secondaire peut être amenée dans la position finale pour réduire, par pressage, le volume prédéterminé à l'intérieur de la paraison. Ainsi, la déformation et l'étirement de la paraison lors de la réduction du volume prédéterminé à l'intérieur de la paraison est mieux contrôlée à l'endroit de la réduction.

### BRÈVE DESCRIPTION DES DESSINS

D'autres particularités et avantages de l'invention ressortiront clairement de la description qui en est faite ci-après, à titre indicatif et nullement limitatif, en référence aux dessins annexés, dans lesquels :
- la figure 1 est une vue en transparence partielle de côté d'un moule selon un premier mode de réalisation de l'invention en position ouverte ;
- la figure 2 est une vue en transparence partielle de côté d'un moule selon le premier mode de réalisation de l'invention en position de fermeture intermédiaire ;
- la figure 3 est une vue de face d'une partie de moule selon le premier mode de réalisation de l'invention en position ouverte ;
- la figure 4 est une vue en perspective d'une partie de moule selon le premier mode de réalisation de l'invention en position ouverte ;
- les figures 5 à 7 sont des vues schématiques en coupe du premier mode de réalisation d'un moule selon l'invention dans différentes positions successives ;
- les figures 8 à 10 sont des vues schématiques en coupe d'un deuxième mode de réalisation d'un moule selon l'invention dans différentes positions successives ;
- la figure 11 est une vue en coupe d'une partie de moule selon l'invention montrant des éléments d'aspiration ;
- la figure 12 est une vue en coupe d'une partie de moule selon l'invention montrant un outil de soufflage ;
- la figure 13 est une vue en coupe d'une partie de moule selon l'invention montrant un élément de préhension à l'état non activé ;
- la figure 14 est une vue en coupe d'une partie de moule selon l'invention montrant un élément de préhension à l'état activé ;
- la figure 15 est une vue en coupe d'une partie de moule selon l'invention montrant un élément combiné de préhension et de chauffage électrique à l'état non activé ;
- la figure 16 est une vue en coupe d'une partie de moule selon l'invention montrant un élément combiné de préhension et de chauffage hydraulique à l'état non activé ;
- la figure 17 est une vue en coupe d'une partie de moule selon l'invention montrant un dispositif de refroidissement ;
- les figures 18 à 21 sont des vues schématiques en coupe d'un troisième mode de réalisation d'un moule selon l'invention dans différentes positions successives ;
- les figures 22 à 25 sont des vues schématiques en coupe d'un quatrième mode de réalisation d'un moule selon l'invention dans différentes positions successives ;
- les figures 26 et 27 sont des vues schématiques en coupe d'un cinquième mode de réalisation d'un moule selon l'invention en position finale selon un plan de coupe passant par une soudure locale.

### DESCRIPTION DÉTAILLÉE D'AU MOINS UN MODE DE RÉALISATION DE L'INVENTION

Sur les différentes figures, les éléments identiques ou similaires portent les mêmes références, éventuellement additionnés d'un indice. La description de leur structure et de leur fonction n'est donc pas systématiquement reprise.

Dans tout ce qui suit, les orientations sont les orientations des figures. En particulier, les termes « supérieur », « inférieur », « gauche », « droit », « au-dessus », « en-dessous », « vers l'avant » et « vers l'arrière » s'entendent généralement par rapport au sens de représentation des figures.

On entend par « réservoir », un réservoir étanche, apte à stocker un fluide dans des conditions d'utilisation et d'environnement diverses et variées. Le réservoir fabriqué avec le moule selon l'invention est réalisé avec une paroi en matière plastique. Une paroi de réservoir présente une surface intérieure et une surface extérieure. La surface intérieure est une surface tournée vers le volume intérieur du réservoir tandis que la surface extérieure est une surface tournée vers le volume extérieur au réservoir.

On entend par « matière plastique », toute matière comprenant au moins un polymère en résine de synthèse. Tous les types de matière plastique peuvent convenir. Des matières plastiques convenant bien appartiennent à la catégorie des matières thermoplastiques.

On entend par « matière thermoplastique », tout polymère thermoplastique, y compris les élastomères thermoplastiques, ainsi que leurs mélanges. On désigne par le terme « polymère » aussi bien les homopolymères que les copolymères (binaires ou ternaires notamment). Des exemples de tels copolymères sont, de manière non limitative : les copolymères à distribution aléatoire, les copolymères séquencés, les copolymères à blocs et les copolymères greffés.

Tout type de polymère ou de copolymère thermoplastique dont la température de fusion est inférieure à la température de décomposition conviennent. Les matières thermoplastiques de synthèse qui présentent une plage de fusion étalée sur au moins 10 degrés Celsius (10°C) conviennent particulièrement bien. Comme exemple de telles matières, on trouve celles qui présentent une polydispersion de leur masse moléculaire.

En particulier, on peut utiliser des polyoléfines, des polyesters thermoplastiques, des polycétones, des polyamides et leurs copolymères. Un mélange de polymères ou de copolymères peut aussi être utilisé, de même qu'un mélange de matières polymériques avec des charges inorganiques, organiques et/ou naturelles comme, par exemple, mais non limitativement : le carbone, les sels et autres dérivés inorganiques, les fibres naturelles ou polymériques. Il est également possible d'utiliser des structures **multicouches** constituées de couches empilées et solidaires comprenant au moins un des polymères ou copolymères précités.

Un polymère souvent employé est le polyéthylène. D'excellents résultats ont été obtenus avec du polyéthylène haute densité (PEHD).

Dans un exemple, le réservoir fabriqué avec le moule selon l'invention est un réservoir à carburant qui comprend une structure multicouche comprenant au moins une couche de matière thermoplastique et au moins une couche supplémentaire qui peut, de manière avantageuse, être constituée d'un matériau barrière aux liquides et/ou aux gaz. De préférence, la nature et l'épaisseur de la couche barrière sont choisies de manière à limiter au maximum la perméabilité des liquides et des gaz en contact avec la paroi du réservoir. De préférence, cette couche est à base d'un matériau barrière, c'est-à-dire d'une résine imperméable au carburant telle que l'EVOH par exemple (copolymère éthylène - acétate de vinyle partiellement hydrolysé). Alternativement, le réservoir peut être soumis à un traitement de surface (fluoration ou sulfonation) ayant pour but de le rendre imperméable au carburant.

On entend par « paraison », une préforme d'une seule pièce, généralement extrudée et de forme substantiellement tubulaire, qui est destinée à constituer la paroi du réservoir après moulage, c'est-à-dire après une opération qui consiste à mettre la paraison, qui est à l'état fondu, aux formes et dimensions requises à l'aide du moule pour obtenir un réservoir.

On entend par « composant interne », un composant ayant une fonction à remplir dans le réservoir telle que ventiler, renforcer, pomper du fluide, mesurer le niveau du fluide, diminuer le bruit lié aux vagues de fluide dans le réservoir. Dans un exemple, le composant interne est un pilier de renfort qui relie deux côtés opposés de la surface intérieure du réservoir.

On entend par « première section », « deuxième section » et « troisième section » de moule, respectivement un premier, un deuxième et un troisième élément moulant situé dans au moins une des parties du moule.

On entend par « première surface de moulage », la surface interne de la au moins une première section de moule délimitant l'espace de moulage de la première portion du corps creux. Cette surface interne comprend un fond et des parties faisant saillies sur le fond.

On entend par « deuxième surface de moulage », la surface interne de la deuxième section de moule délimitant l'espace de moulage de la deuxième portion du corps creux. Cette surface interne comprend un fond et des parties faisant saillie sur le fond.

On entend par « troisième surface de moulage », la surface interne de la troisième section de moule délimitant l'espace de moulage de la troisième portion du corps creux. Cette surface interne comprend un fond et des parties faisant saillie sur le fond.

On entend par « la première surface de moulage est au moins égale à 15 % de la surface totale de moulage », le fait que l'aire de la première surface de moulage est supérieure ou égale à 15 % de l'aire de la surface totale de moulage tout en étant strictement inférieure à 100 % de l'aire de la surface totale moulage.

Avantageusement, la somme des surfaces de moulage des deux parties de moule est égale à la surface totale de moulage. Ainsi, les deux parties de moule suffisent pour fabriquer le corps creux de réservoir en entier.

On entend par « soudage plastique », un ensemble de techniques utilisées pour souder deux pièces en matière thermoplastique. À titre d'exemple, le soudage plastique peut consister, dans la mesure où les matériaux du composant interne et de la paraison sont compatibles au soudage, à appliquer, par pressage de chaque région d'appui primaire de la au moins une première section de moule, une pression de contact à l'interface entre l'intérieur de la paraison, qui est à l'état fondue, et une zone à fixer dudit au moins un composant interne. Pour faciliter le soudage plastique, la zone à fixer dudit au moins un composant interne est, de préférence, préalablement chauffée pour être ramollie et fondue.

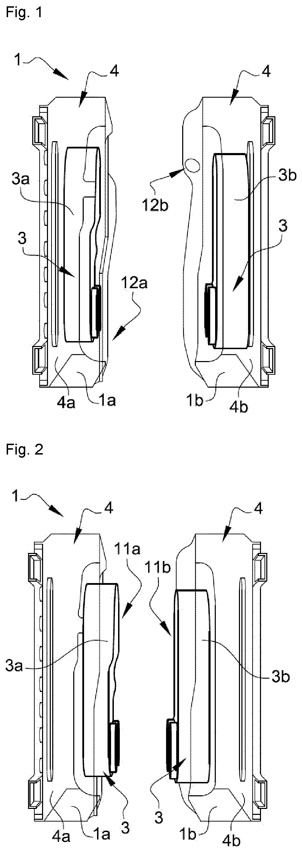

On entend par « bouterollage », un ensemble de techniques utilisées pour fixer un composant interne à la paraison, notamment dans le cas où les matériaux du composant interne et de la paraison ne sont pas compatibles au soudage, par pressage de chaque région d'appui primaire de la au moins une première section de moule, afin d'induire l'entrée d'une partie de la paraison par fluage de cette dernière dans un évidement du composant interne. Après durcissement de la paraison, le bouterollage empêche, grâce à la forme de l'évidement, le retrait du composant par rapport à la paraison durcie. Des exemples de forme durcie de paraison et d'évidement de composant sont référencés respectivement 5 et 3 dans les figures 1 et 2 du document WO 2007/090453.

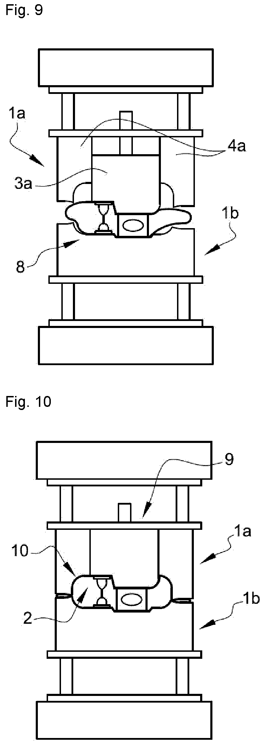

On entend par « ancrage mécanique », un ensemble de techniques utilisées pour fixer un composant interne à la paraison, notamment dans le cas où les matériaux du composant interne et de la paraison ne sont pas compatibles au soudage, par pressage de chaque région d'appui primaire de la au moins une première section de moule, afin d'induire l'entrée d'une partie du composant interne dans la paraison par fluage de cette dernière. Après durcissement de la paraison, l'ancrage mécanique empêche, grâce à la forme du composant interne entrée dans la paraison, le retrait du composant interne par rapport à la paraison durcie. Des exemples de forme durcie de paraison et d'une partie entrée de composant interne sont référencés respectivement 116 et 102 dans la figure 10 du document EP 1 211 196.

Les organes d'extrusion-soufflage connus de l'homme du métier sont repris de manière habituelle sauf exceptions indiquées dans la présente description. Les organes habituels tels que les supports de composants internes (par exemple des tiges), les moyens de soufflage, les moyens de fabrication de la paraison, les moyens de séparation et de guidage de la paraison autour des composants internes ou les moyens d'étanchéité de la paraison pour effectuer un pré-soufflage tels que ceux expliqués par exemple dans le document WO 2008/138869 (cf. notamment références 3, 6, 7 et 7') ne sont donc pas systématiquement décrits dans la présente description.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou interchangées pour fournir d'autres réalisations.

Dans la présente description, on peut indexer certains éléments ou paramètres, par exemple premier élément ou deuxième élément ainsi que premier paramètre et second paramètre ou encore premier critère et deuxième critère, etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tel ou tel critère.

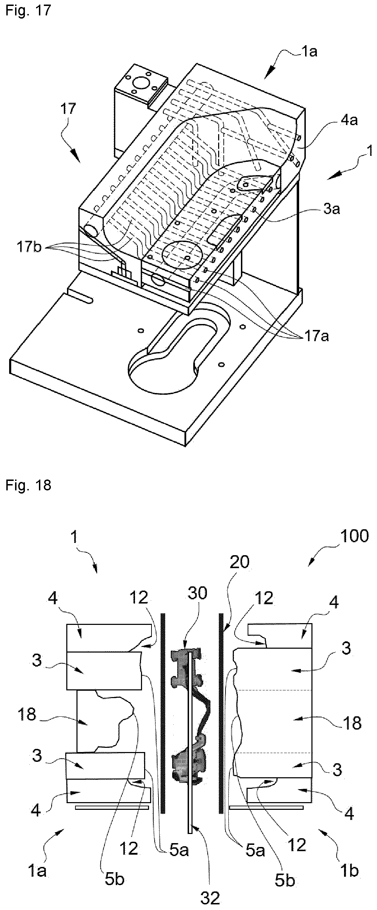

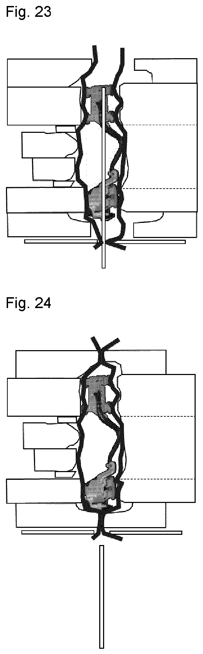

Les figures 1 à 17 ne montrent que les premiers et deuxième sections. La troisième section est représentée sur les figures 18 à 25.

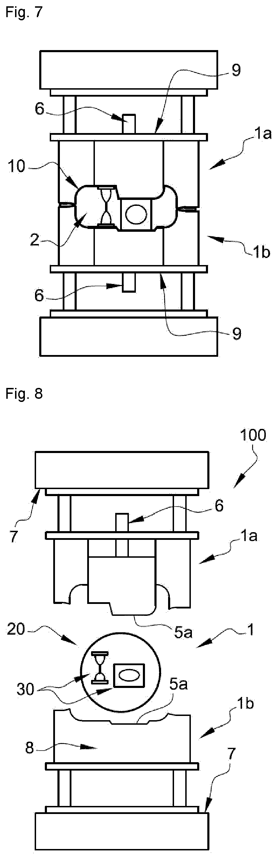

Les figures 1 et 2 illustrent un moule 1 pour la fabrication par moulage par extrusion-soufflage d'un corps creux 10 de réservoir en matière plastique pour un véhicule automobile à partir d'une paraison 20, le réservoir comportant au moins un composant interne 30 fixé à l'intérieur de la paraison lors du moulage du corps creux. Plus particulièrement, la figure 1 illustre le moule 1 en position d'ouverture et la figure 2 illustre le moule dans une position de fermeture intermédiaire. Comme expliqué ci-dessous, le corps creux 10 est obtenu lorsque le moule 1 est en position de fermeture finale (illustrée aux figures 7 et 10).

Le moule 1 comprend deux parties 1a et 1b déplaçables l'une par rapport à l'autre délimitant intérieurement, lorsqu'elles sont fermées l'une contre l'autre (comme visible aux figures 7 et 10), une surface totale de moulage, ou cavité 2, destinée à reproduire une forme prédéterminée du corps creux 10 à fabriquer.

Selon l'invention, au moins une des parties 1a, 1b du moule 1 comprend :
- au moins une première section 3a, 3b ayant une première surface 11, 11a, 11b de moulage d'une première portion du corps creux 10 à fabriquer, ladite première surface 11, 11a, 11b de moulage comportant au moins une région d'appui primaire 5a configurée pour former, par pressage, une zone de fixation de l'intérieur de la paraison 20 avec ledit au moins un composant interne 30,
- une deuxième section 4, 4a, 4b ayant une deuxième surface 12, 12a, 12b de moulage d'une deuxième portion du corps creux 10 à fabriquer.

La deuxième section 4, 4a, 4b de la partie 1a, 1b du moule 1 est mobile par rapport à sa au moins une première section 3, 3a, 3b associée de la partie 1a, 1b du moule 1 entre au moins une position de fermeture intermédiaire des parties 1a, 1b du moule 1 (illustrée aux figures 2, 6 et 9) et une position de fermeture finale des parties 1a, 1b du moule 1 (illustrée aux figures 7 et 10).

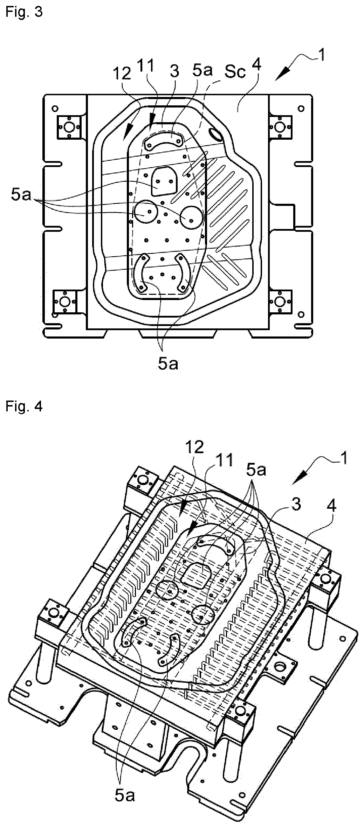

Avantageusement selon l'invention, la première surface 11, 11a, 11b de moulage de la partie 1a, 1b du moule 1 comporte plusieurs régions d'appui primaire 5a comme illustré aux figures 3 et 4 et est configurée afin que les régions d'appui primaire 5a forment en même temps, par pressage, plusieurs zones de fixation dudit au moins un composant interne 30 à l'intérieur de la paraison 20.

Comme illustré à la figure 3, la première surface 11, 11a, 11b de moulage de la partie 1a, 1b du moule 1 peut ainsi être configurée pour s'étendre selon une surface circonscrite Sc (en traits interrompus à la figure 3) contenant des régions 5a d'appui primaire de la partie 1a, 1b du moule 1 voire toutes les régions 5a d'appui primaire associées à la partie 1a, 1b du moule 1. Bien entendu, la surface circonscrite Sc en traits interrompus à la figure 3 n'est qu'un exemple et les zones d'appui primaire 5a peuvent ne pas être reliées entre elles par des segments rectilignes mais des segments courbes sans sortir du cadre de l'invention.

Ainsi, chaque partie 1a, 1b comportant une première surface 11, 11a, 11b de moulage présente une surface unique vers la paraison 20 en position de fermeture intermédiaire (illustrée aux figures 2, 6 et 9) afin de fixer la paraison 20, grâce aux différentes régions d'appui primaire 5a distinctes de la première surface 11, 11a, 11b de moulage, selon plusieurs zones de fixation prédéterminées ou toutes les zones de fixation dudit au moins un composant interne 30 de la partie 1a, 1b du moule 1 en même temps.

La surface circonscrite Sc de chaque première surface 11, 11a, 11b de moulage peut comporter une distance de marge prédéterminée au moins autour des régions 5a d'appui primaire dudit au moins un composant interne 30 associées à la partie du moule 1 afin de limiter les ondulations de la matière autour de chaque zone de fixation. La distance de marge prédéterminée au moins autour des régions 5a d'appui primaire peut être comprise entre 1 mm et 60 mm. Bien entendu, la distance de marge prédéterminée n'est pas forcément constante par rapport à chaque région 5a d'appui primaire ou entre chaque région d'appui primaire. La figure 3 montre ainsi un exemple de première surface 11 dont la marge prédéterminée n'est pas constante autour d'un autre exemple de surface circonscrite Sc en traits interrompus sans que l'invention y soit limitée.

La surface circonscrite Sc de la première surface 11, 11a, 11b de moulage d'au moins une des parties 1a, 1b du moule 1 est préférentiellement au moins égale à 15 % de la surface totale de moulage. Il est immédiat que, suivant le mode de réalisation, c'est-à-dire si une seule partie 1a, 1b du moule 1 ou les deux parties 1a, 1b du moule 1 comporte(nt) au moins une première section 3, 3a, 3b, le pourcentage total de la au moins une première section 3, 3a, 3b de moule 1 est respectivement au moins égale à 15 % ou au moins égale à 30 % de la surface totale de moulage. De préférence, la surface circonscrite Sc de la première surface 11, 11a, 11b de moulage de la partie 1a, 1b du moule est comprise entre 20 % et 40 % de la surface totale de moulage, c'est-à-dire par exemple égale à 20 %, 21 %, 22 %, 23 %, 24 %, 25 %, 26 %, 27 %, 28 %, 29 %,30 %, 31 %, 32 %, 33 %, 34 %, 35 %, 36 %, 37 %, 38 %, 39 % ou 40 %.

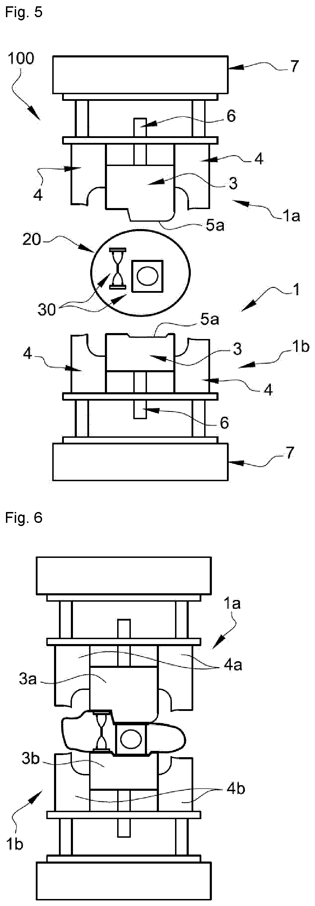

Les figures 5 à 7 illustrent une machine de moulage 100 par extrusion-soufflage d'un corps creux 10 de réservoir en matière plastique pour un véhicule automobile à partir d'une paraison 20. La machine 100 comprend le moule 1 présenté plus haut selon un premier mode de réalisation. La figure 5 montre le moule 1 en position d'ouverture (moule 1 ouvert), la figure 6 montre le moule 1 en position de fermeture intermédiaire et la figure 7 montre le moule en position de fermeture finale.

Dans la position de fermeture intermédiaire, la au moins une première section 3, 3a, 3b de moule 1 fait saillie de la deuxième section 4, 4a, 4b de moule 1. Dans la position de fermeture finale, la deuxième section 4, 4a, 4b de moule 1 entoure la au moins une première section 3, 3a, 3b de moule 1 qui n'a pas changée de place.

La au moins une première section 3, 3a, 3b de moule 1 comprend des régions d'appui primaire 5a configurées pour appuyer la paraison 20 contre ledit au moins un composant interne 30 afin de former au moins deux zones de fixation différentes dudit même au moins un composant interne 30 pour fixer ledit même au moins un composant interne 30 à l'intérieur de la paraison 20 lors du moulage du corps creux 10.

Avantageusement, chaque région d'appui primaire 5a est configurée pour autoriser le soudage, le bouterollage ou l'ancrage mécanique pour fixer ledit au moins un composant interne 30 à l'intérieur de la paraison 20 lors du moulage du corps creux 10. Chaque région d'appui primaire peut ainsi comprendre une géométrie, des caractéristiques mécaniques et/ou un matériau destiné à faciliter le soudage, le bouterollage ou l'ancrage mécanique. À titre d'exemple nullement limitatif, la région d'appui primaire 5a peut comporter une surface plane dont le matériau possède une température de fusion supérieure à celle de la paraison et de la zone à fixer du composant interne afin que, par pressage de la région d'appui primaire, au moins une zone de fixation par soudage soit formée entre la paraison et la zone à fixer du composant interne. Bien entendu, en addition ou en substitution, la région d'appui primaire peut également comprendre une protubérance destinée à favoriser un bouterollage et/ou un évidement destiné à favoriser un ancrage mécanique.

La première partie 1a de moule 1 comprend au moins une première section 3a de moule 1 et, la deuxième partie 1b de moule 1 comprend au moins une autre première section 3b de moule 1. La au moins une première section 3a de moule 1 est mobile par rapport à la au moins une autre première section 3b de moule 1 entre la position d'ouverture et la position de fermeture intermédiaire du moule 1. La au moins une première section 3a, 3b de chaque partie 1a, 1b de moule 1 comprend un premier actionneur 6 pour passer de la position d'ouverture à la position de fermeture intermédiaire et réciproquement.

La première partie 1a de moule 1 comprend une deuxième section 4a de moule 1 et, la deuxième partie 1b de moule 1, une autre deuxième section 4b de moule 1. Les deuxièmes sections 4a, 4b de moule 1 sont mobiles l'une par rapport à l'autre entre la position de fermeture intermédiaire et la position de fermeture finale du moule 1. Chaque deuxième section 4a, 4b de moule 1 comprend un deuxième actionneur 7 pour passer de la position de fermeture intermédiaire à la position de fermeture finale et réciproquement.

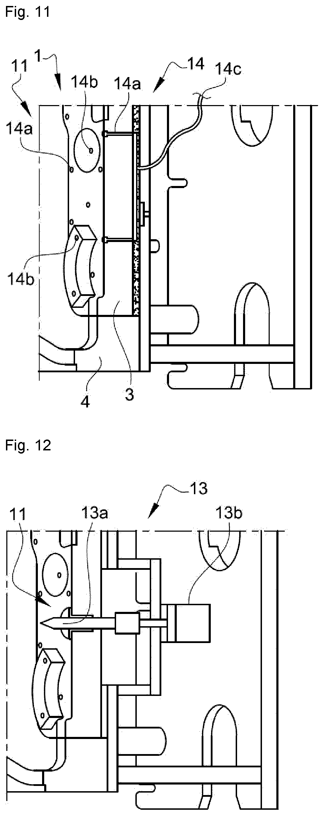

Dans l'exemple illustré à la figure 11, la au moins une première section de moule 3 comprend, dans au moins une région d'appui primaire 5a, au moins un élément 14b d'aspiration destiné à aspirer la paraison 20 lors du moulage du corps creux 10. On peut également voir que le fond de la première surface 11 de moulage comporte également au moins un élément 14a d'aspiration. On peut également s'apercevoir que plusieurs élément 14a d'aspiration sont reliés entre eux et communiquent via un raccordement 14c avec un dispositif d'aspiration (non représenté) tel qu'une machine à vide. Ainsi, la paraison 20 est mieux plaquée sur la première surface 11 de moulage, ce qui évite aussi la déformation locale de la paraison 20.

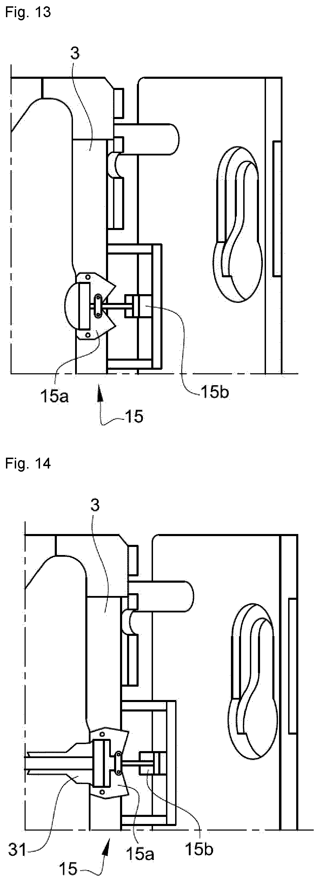

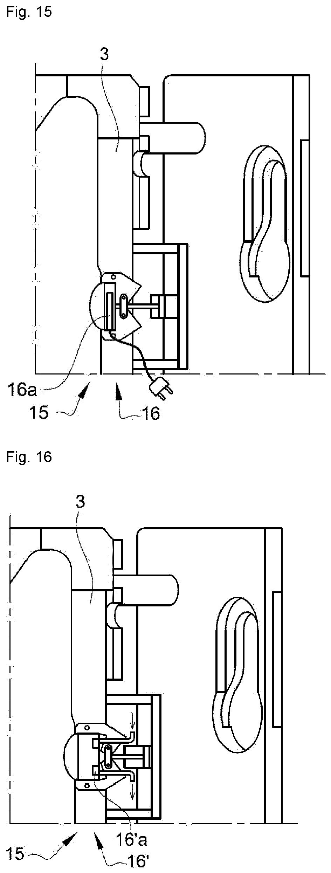

Dans les exemples illustrés aux figures 13 à 16, la au moins une première section 3 de moule 1 comprend un élément choisi parmi un élément 15 de préhension, un élément 16, 16' de chauffage et un élément combiné de préhension 15 et de chauffage 16, 16' d'une pièce 31, qui peut être ou non ledit au moins un composant interne 30, destinée à être moulée avec la première portion du corps creux 10, l'élément de préhension peut ainsi être est une pince 15a ou un élément d'aspiration. Dans les exemples des figures 13-14, la pince 15a peut passer d'une position ouverte (figure 13) à une position fermée (figure 14) à l'aide d'un actionneur 15b afin de rabattre la paraison 20 contre la pièce 31 comme, par exemple, expliqué dans le document EP 3 946 905. L'élément 16 de chauffage dans l'exemple de la figure 15 est un chauffeur électrique 16a alors que celui 16' dans l'exemple de la figure 16 est un chauffeur hydraulique 16'a afin de réchauffer localement au moins la paraison 20. Selon un exemple, la pièce 31 est une attache métallique ou un renfort fibreux.

Dans l'exemple illustré à la figure 12, la au moins une première section 3 de moule 1 comprend un outil 13 de soufflage destiné à introduire un gaz sous pression à l'intérieur de la paraison 20. Comme visible à la figure 12, l'outil 13 de soufflage comporte une aiguille 13a de soufflage capable de percer la paraison 20 pour exécuter l'étape d). On peut également voir que l'aiguille 13a est montée mobile par rapport à la première surface 11 de moulage à l'aide d'un actionneur 13b pour passer d'une position escamotée dans la au moins une première section 3 à une position en saillie du fond de la première surface 11 de moulage et réciproquement.

Dans l'exemple illustré à la figure 17, la au moins une première section 3 et/ou la deuxième section 4 de la partie 1a du moule 1 comprend un dispositif 17 de refroidissement destiné à refroidir une portion du corps creux 10. La au moins une première section 3a de moule 1 comprend des éléments 17a de refroidissement destinés à refroidir la première portion du corps creux 10. La deuxième section 4a de moule 1 comprend des éléments 17b de refroidissement destinés à refroidir la deuxième portion du corps creux 10. Bien entendu, les éléments 17a, 17b de refroidissement peuvent faire parties d'un même circuit hydraulique du dispositif 17 de refroidissement.

Les figures 8 à 10 illustrent un deuxième mode de réalisation du moule 1. Le deuxième mode de réalisation diffère du premier mode de réalisation en ce que la deuxième partie 1b de moule 1 forme une section monobloc 8. En d'autres termes, la section monobloc 8 dans les figures 8 à 10 remplace la au moins une première section 3b et la deuxième section 4b de la partie 1b du moule 1 par rapport au premier mode de réalisation des figures 5 à 7. Ceci permet de simplifier le moule 1 en réduisant le nombre de pièces nécessaires à sa construction.

Les figures 18 à 21 illustrent un troisième mode de réalisation du moule 1. Le troisième mode de réalisation diffère du premier mode de réalisation en ce que le moule 1 est un moule de fabrication par extrusion-soufflage d'un corps creux 10 de « réservoir à selle » en matière plastique pour un véhicule automobile à partir d'une paraison 20.

La partie 1a du moule 1 comporte au moins une troisième section 18, 18a ayant une troisième surface 19, 19a de moulage d'une troisième portion du corps creux 10 à fabriquer. La troisième surface 19, 19a de moulage comporte au moins une région d'appui secondaire 5b. La au moins une troisième section 18, 18a de la partie 1a du moule 1 est mobile par rapport à la au moins une première section 3, 3a associée de la partie 1a du moule 1 au moins entre une position intermédiaire et une position finale. Dans la position finale, la au moins une région d'appui secondaire 5b est configurée pour réduire, par pressage, un volume prédéterminé à l'intérieur de la paraison 20.

Dans les exemples illustrés aux figures 18 à 25, la troisième surface 19, 19a de moulage de la partie 1a du moule 1 comporte plusieurs régions d'appui secondaire 5b. Dans ces exemples, la première partie 1a du moule 1 comporte au moins une première section 3a, une deuxième section 4a et au moins une troisième section 18a, la deuxième partie 1b du moule 1 comporte une deuxième section 4b et une section unique monobloc regroupant le au moins une première section 3b et le au moins une troisième section 18b.

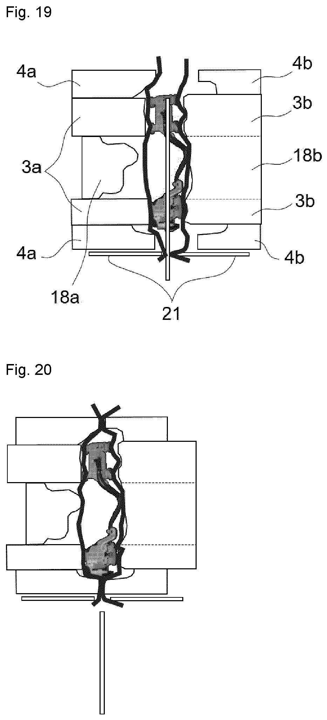

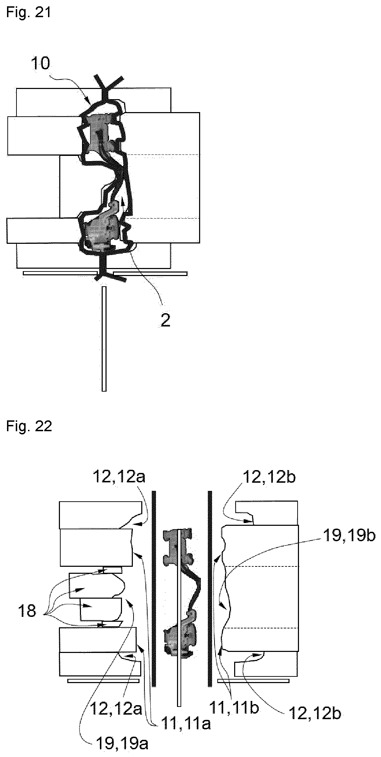

Les figures 18 à 21 illustrent aussi une partie d'une machine de moulage 100 par extrusion-soufflage d'un corps creux 10 de réservoir à selle en matière plastique pour un véhicule automobile à partir d'une paraison 20. La machine 100 comprend le moule 1 présenté plus haut selon un troisième mode de réalisation. La figure 18 montre le moule 1 en position d'ouverture (moule 1 ouvert), la figure 19 montre le moule 1 en position de fermeture intermédiaire et la figure 20 montre le moule 1 en position de fermeture finale. La figure 20 montre également la au moins une troisième section 18 de la partie 1a du moule 1 en position intermédiaire et la figure 21 montre la au moins une troisième section 18 de la partie 1a du moule 1 en position finale.

Dans l'exemple illustré précédemment, dans la position de fermeture finale des parties 1a, 1b du moule 1, la deuxième section 4, 4a, 4b de moule 1 entoure la au moins une première section 3, 3a, 3b de moule 1 et la au moins une première section 3, 3a, 3b de moule 1 entoure la au moins une troisième section 18, 18a, 18b, de sorte que les première 11, 11a, 11b, deuxième 12, 12a, 12b et troisième 19, 19a, 19b surfaces de moulage se rejoignent pour former la surface totale de moulage, ou cavité 2.

Les figures 18 à 21 illustrent également un procédé de moulage par extrusion-soufflage d'un corps creux 10 de réservoir à selle en matière plastique pour un véhicule automobile à partir d'une paraison 20, le réservoir à selle comportant au moins un composant interne 30 fixé à l'intérieur de la paraison 20 lors du moulage du corps creux 10, le procédé comprend les étapes suivantes, réalisées de préférence successivement :
a) introduire ledit au moins un composant interne 30 et la paraison 20 à l'état fondu dans un moule 1 ouvert en deux parties 1a, 1b de manière à ce que ledit au moins un composant interne 30 soit entouré par la paraison 20, au moins une partie 1a, 1b dudit moule 1 comprenant au moins une première section 3, une deuxième section 4 et au moins une troisième section 18 délimitant intérieurement respectivement une première 11 surface de moulage, une deuxième surface 12 de moulage et une troisième surface 19 de moulage d'une surface totale de moulage du moule 1,
b) déplacer la au moins une première section 3 de la partie 1a, 1b du moule 1 pour amener le moule 1 dans une position de fermeture intermédiaire dans laquelle la au moins une première section 3 appuie la paraison 20 contre ledit au moins un composant interne 30 afin de fixer ledit au moins un composant interne 30 à l'intérieur de la paraison 20, la première surface 11 de moulage étant configurée pour former en même temps, par pressage, plusieurs zones de fixation dudit au moins un composant interne 30 à l'intérieur de la paraison 20,
c) déplacer la deuxième section 4 de la partie 1a, 1b du moule 1 par rapport à la au moins une première section 3 de la partie 1a, 1b du moule 1 pour amener le moule 1 dans une position de fermeture finale dans laquelle les deux parties 1a, 1b du moule 1 sont fermées l'une contre l'autre en délimitant intérieurement la surface totale de moulage destinée à reproduire une forme prédéterminée du corps creux 10 à fabriquer,
d) déplacer la au moins une troisième section 18 de la partie 1a, 1b du moule 1 par rapport à la au moins une première section 3 de la partie 1a, 1b du moule 1 pour amener la au moins une troisième section 18 dans une position dans laquelle la troisième surface 19 de moulage presse la paraison 20 afin de réduire un volume prédéterminé à l'intérieur de la paraison 20,
e) réaliser un soufflage de la paraison 20 en plaquant ladite paraison 20 sur la surface totale de moulage du moule 1 à l'aide d'un gaz sous pression,
f) ouvrir le moule 1 pour sortir le corps creux 10 fabriqué.

De préférence, on introduit un gaz sous pression à l'intérieur de la paraison 20 pour effectuer un pré-soufflage de ladite paraison 20 entre l'étape a) et l'étape b). Une telle introduction de gaz peut être effectuée selon l'étape b) du document WO 2008/138869 afin notamment d'expanser la paraison en homogénéisant l'épaisseur de la paraison. L'introduction de gaz à plus faible pression que pour l'étape e) peut être obtenue de différentes manières connues par l'homme du métier. À titre d'exemple nullement limitatif, l'introduction de gaz pour le pré-soufflage peut être obtenue par l'outil de soufflage utilisé pour réaliser l'étape e), par un outil dédié monté sur le moule, par une tige creuse de support de composant interne ou par une buse comprise dans la tête d'extrusion de la paraison.

Avantageusement, à l'étape b), ledit au moins un composant interne 30 est fixé à l'intérieur de la paraison 20 par soudage, bouterollage ou ancrage mécanique.

En position de fermeture finale du moule 1, le soufflage de l'étape e) est réalisé sous une pression de soufflage de l'ordre de 10 bars (1 MPa).

De préférence, la au moins une troisième section 18 de la partie 1a, 1b du moule 1 est divisée en plusieurs sous-sections mobiles les unes par rapport aux autres entre une position intermédiaire et une position finale et la troisième surface 19 de moulage comporte plusieurs régions d'appui secondaire 5b, chaque région d'appui secondaire 5b étant portée par une sous-section de la au moins une troisième section 18.

Les figures 22 à 25 illustrent un quatrième mode de réalisation du moule 1. Le quatrième mode de réalisation diffère du troisième mode de réalisation en ce que la au moins une troisième section 18, 18a de la partie 1a du moule 1 est divisée en plusieurs sous-sections séparées les unes des autres et chaque région d'appui secondaire 5b est portée par une sous-section de la au moins une troisième section 18, 18a de la partie 1a du moule 1.

Avantageusement selon l'invention, les sous-sections de la au moins une troisième section 18, 18a de la partie 1a du moule 1 sont mobiles les unes par rapport aux autres entre une position intermédiaire et la position finale.

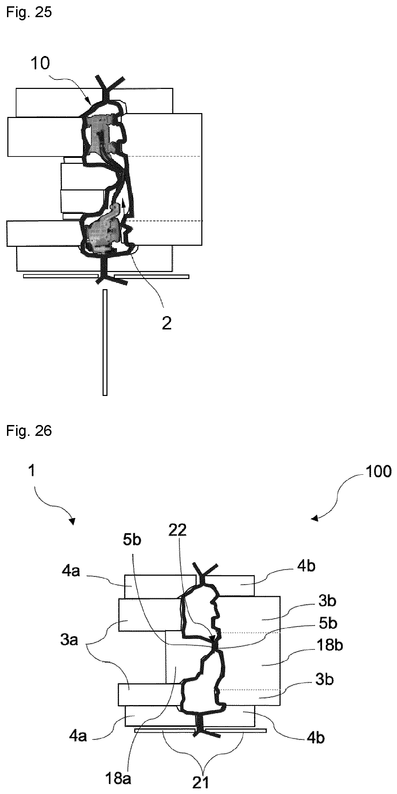

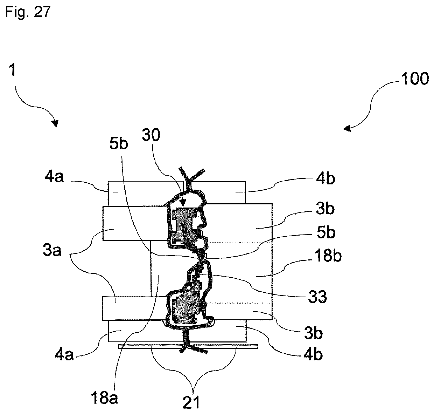

Les figures 26 et 27, dans lesquelles le moule 1 est en position finale, illustrent un cinquième mode de réalisation du moule 1. Le cinquième mode de réalisation diffère du troisième mode de réalisation en ce que la région d'appui secondaire 5b est configurée pour, lorsque la troisième section 18, 18a, 18b de la partie 1a, 1b de moule 1 est en position finale, mettre en contact deux régions opposées de la paraison 20 de manière à les souder localement l'une à l'autre. Cette soudure locale 22 est parfois désignée par les expressions anglaises « kiss off » ou « kiss point » et permet, par exemple, de renforcer localement le corps creux. Plus particulièrement, selon ce mode de réalisation particulier, chaque partie 1a, 1b de moule 1 comprend au moins une région d'appui secondaire 5b, les régions d'appui secondaires 5b étant configurées pour, lorsque les troisièmes sections 18a, 18b respectives de chaque partie 1a, 1b de moule 1 sont en position finale, presser entre elles deux régions opposées de la paraison 20 de manière à les souder localement l'une à l'autre. Il est ainsi possible de créer facilement une soudure locale 22 permettant, par exemple, de renforcer le corps creux. On comprend que les régions d'appui secondaire 5b ont une forme particulière permettant de mettre en contact les deux régions opposées de la paraison 20 afin de permettre la soudure locale 22. Cette forme varie selon les modes de réalisation, par exemple en fonction de la surface de contact souhaitée entre les deux régions opposées de la paraison 20.

Les figures 26 et 27 représentent le moule 1 en position finale selon un plan de coupe passant par la soudure locale 22. Dans le cas présent, on constate que cette soudure locale 22 permet de relier localement les parois de la paraison 20 destinées à former les parois supérieure et inférieure du corps creux 10.

A la figure 27, on a aussi représenté le composant interne 30 à fixer. Dans cet exemple, le composant interne 30 comprend une ligne de carburant 33 reliant deux parties opposées du composant interne 30. A noter que la ligne de carburant 33 n'est pas située dans le plan de coupe passant par la soudure locale 22 mais dans un autre plan parallèle à ce dernier.

L'invention n'est pas limitée aux modes de réalisation et variantes présentés et d'autres modes de réalisation et variantes apparaîtront clairement à l'homme du métier. Ainsi, les réalisations ci-dessus sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou interchangées pour fournir d'autres réalisations. À titre nullement limitatif, dans le deuxième mode de réalisation, il peut être envisagé qu'un seul actionneur 7 soit utilisé pour déplacer la deuxième section 4a vers la section monobloc 8 (qui serait donc statique) afin de simplifier encore d'avantage la machine de moulage 100. De même, bien que les figures 1à 17 illustrent la présence d'une seule première section 3a, 3b de la partie 1a, 1b du moule 1, on peut envisager que la au moins une première section 3a, 3b de moule 1 comprenne plusieurs premières sections 3a, 3b, par exemple, deux, trois, quatre, cinq, six, sept, huit, neuf ou dix premières sections 3a, 3b.

### Liste de références

1 : moule
1a : première partie du moule
1b : deuxième partie du moule
2 : cavité de moule
3, 3a, 3b : première section de moule
4, 4a, 4b : deuxième section de moule
5a : région d'appui primaire
5b : région d'appui secondaire
6 : premier actionneur
7 : deuxième actionneur
8 : section monobloc
9 : plaque support
10 : corps creux
11, 11a, 11b : première surface de moulage
12, 12a, 12b : deuxième surface de moulage
13 : outil de soufflage
13a : aiguille de soufflage
13b : actionneur d'aiguille de soufflage
14 : élément d'aspiration
14a : élément d'aspiration de fond
14b : élément d'aspiration de région d'appui primaire 5a
14c : raccordement à un dispositif d'aspiration
15 : élément de préhension
15a : pince
15b : actionneur
16, 16' : élément de chauffage
16a : chauffeur électrique
16b : chauffeur hydraulique
17 : dispositif de refroidissement
17a : élément de refroidissement de la première section 3a
17b : élément de refroidissement de la deuxième section 4a
18, 18a, 18b : troisième section de moule
19, 19a, 19b : troisième surface de moulage
20 : paraison
21 : pièces mobiles d'un dispositif d'étanchéité inférieur de la paraison
22 : soudure locale
30 : composant interne
31 : pièce
32 : tige de support de composant interne
33 : ligne de carburant
100 : machine de moulage par extrusion-soufflage

## Revendications

1. Moule (1) de fabrication par extrusion-soufflage d'un corps creux (10) de réservoir en matière plastique pour un véhicule automobile à partir d'une paraison (20), le réservoir comportant au moins un composant interne (30) fixé à l'intérieur de la paraison (20) lors du moulage du corps creux (10), le moule (1) comprenant deux parties (1a, 1b) déplaçables l'une par rapport à l'autre délimitant intérieurement, lorsqu'elles sont fermées l'une contre l'autre, une surface totale de moulage destinée à reproduire une forme prédéterminée du corps creux (10) à fabriquer, au moins une des parties (1a, 1b) du moule (1) comporte :
- au moins une première section (3, 3a, 3b) ayant une première surface (11, 11a, 11b) de moulage d'une première portion du corps creux (10) à fabriquer, ladite première surface (11, 11a, 11b) de moulage comporte au moins une région d'appui primaire (5a) configurée pour former, par pressage, une zone de fixation dudit au moins un composant interne (30) à l'intérieur de la paraison (20),
- une deuxième section (4, 4a, 4b) ayant une deuxième surface (12, 12a, 12b) de moulage d'une deuxième portion du corps creux (10) à fabriquer, ladite deuxième section (4, 4a, 4b) de la partie (1a, 1b) du moule (1) est mobile par rapport à la au moins une première section (3, 3a, 3b) associée de la partie (1a, 1b) du moule (1) au moins entre une position de fermeture intermédiaire et une position de fermeture finale des parties (1a, 1b) du moule (1), et
- au moins une troisième section (18, 18a, 18b) ayant une troisième surface (19, 19a, 19b) de moulage d'une troisième portion du corps creux (10) à fabriquer, ladite troisième surface (19, 19a, 19b) de moulage comporte au moins une région d'appui secondaire (5b), ladite au moins une troisième section (18, 18a, 18b) de la partie (1a, 1b) du moule (1) est mobile par rapport à la au moins une première section (3, 3a, 3b) associée de la partie (1a, 1b) du moule (1) au moins entre une position intermédiaire et une position finale dans laquelle la au moins une région d'appui secondaire (5b) est configurée pour réduire, par pressage, un volume prédéterminé à l'intérieur de la paraison (20).

2. Moule (1) selon la revendication précédente, dans lequel la première surface (11, 11a, 11b) de moulage de la partie (1a, 1b) du moule (1) est configurée pour s'étendre selon une surface circonscrite contenant les régions (5a) d'appui primaire associées à la partie (1a, 1b) du moule (1).

3. Moule (1) selon la revendication précédente, dans lequel la surface circonscrite de la première surface (11, 11a, 11b) de moulage de la partie (1a, 1b) du moule (1) comporte une distance de marge prédéterminée au moins autour des régions (5a) d'appui primaire dudit au moins un composant interne (30) associées à la partie (1a, 1b) du moule (1) afin de limiter les ondulations de la matière autour de chaque zone de fixation.

4. Moule (1) selon la revendication précédente, dans lequel la distance de marge prédéterminée au moins autour des zones de fixation est comprise entre 1 mm et 60 mm.

5. Moule (1) selon l'une quelconque des revendications 2 à 4, dans lequel la surface circonscrite de la première surface (11, 11a, 11b) de moulage d'au moins une des parties (1a, 1b) de moule (1) est au moins égale à 15 % de la surface totale de moulage.

6. Moule (1) selon l'une quelconque des revendications précédentes, dans lequel la région d'appui secondaire (5b) ou au moins une des régions d'appui secondaire (5b) est configurée pour, lorsque la troisième section (18, 18a, 18b) de la partie (1a, 1b) de moule (1) est en position finale, mettre en contact deux régions opposées de la paraison (20) de manière à les souder localement l'une à l'autre.

7. Moule (1) selon l'une quelconque des revendications précédentes, dans lequel la troisième surface (19, 19a, 19b) de moulage de la partie (1a, 1b) du moule (1) comporte plusieurs régions d'appui secondaire (5b).

8. Moule (1) selon la revendication précédente, dans lequel la au moins une troisième section (18, 18a, 18b) de la partie (1a, 1b) du moule (1) est divisée en plusieurs sous-sections séparées les unes des autres et chaque région d'appui secondaire (5b) est portée par une sous-section de la au moins une troisième section (18, 18a, 18b) de la partie (1a, 1b) du moule (1).

9. Moule (1) selon la revendication précédente, dans lequel les sous-sections de la au moins une troisième section (18, 18a, 18b) de la partie (1a, 1b) du moule (1) sont mobiles les unes par rapport aux autres entre une position intermédiaire et la position finale.

10. Moule (1) selon l'une quelconque des revendications précédentes, dans lequel chaque partie (1a, 1b) du moule (1) comporte au moins une première section (3, 3a, 3b), une deuxième section (4, 4a, 4b) et au moins une troisième section (18, 18a, 18b).

11. Moule (1) selon la revendication précédente, dans lequel la au moins une première section (3, 3a, 3b) de moule (1) de chaque partie (1a, 1b) du moule (1) comprend au moins une région d'appui primaire (5a) configurée pour appuyer la paraison (20) contre ledit même au moins un composant interne (30) afin de former au moins deux zones de fixation différentes dudit même au moins un composant interne (30) pour fixer ledit même au moins un composant interne (30) à l'intérieur de la paraison (20) lors du moulage du corps creux (10).

12. Moule (1) selon l'une quelconque des revendications 1 à 9, dans lequel une seule des parties (1a, 1b) du moule (1) comporte au moins une première section (3, 3a, 3b), une deuxième section (4, 4a, 4b) et au moins une troisième section (18, 18a, 18b).

13. Moule (1) selon l'une quelconque des revendications précédentes, dans lequel, dans la position de fermeture finale, la au moins une première section (3, 3a, 3b) de moule de chaque partie (1a, 1b) du moule (1) est entourée par sa deuxième section (4, 4a, 4b) associée de la partie (1a, 1b) du moule (1).

14. Machine (100) de moulage par extrusion-soufflage d'un corps creux (10) de réservoir en matière plastique pour un véhicule automobile à partir d'une paraison, **caractérisée en ce que** la machine comprend un moule (1) selon l'une quelconque des revendications précédentes.

15. Procédé de moulage par extrusion-soufflage d'un corps creux (10) de réservoir en matière plastique pour un véhicule automobile à partir d'une paraison (20), le réservoir comportant au moins un composant interne (30) fixé à l'intérieur de la paraison (20) lors du moulage du corps creux (10), **caractérisé en ce que** le procédé comprend les étapes suivantes :
a) introduire ledit au moins un composant interne (30) et la paraison (20) à l'état fondu dans un moule (1) ouvert en deux parties (1a, 1b) de manière à ce que ledit au moins un composant interne (30) soit entouré par la paraison (20), au moins une partie (1a, 1b) du moule (1) comprenant au moins une première section (3), une deuxième section (4) et au moins une troisième section (18) délimitant intérieurement respectivement une première surface (11) de moulage, une deuxième surface (12) de moulage et une troisième surface (19) de moulage d'une surface totale de moulage du moule (1),
b) déplacer la au moins une première section (3) de la partie (1a, 1b) du moule (1) pour amener le moule (1) dans une position de fermeture intermédiaire dans laquelle la au moins une première section (3) de la partie (1a, 1b) du moule (1) appuie la paraison (20) contre ledit au moins un composant interne (30) afin de fixer ledit au moins un composant interne (30) à l'intérieur de la paraison 20, la première surface (11) de moulage étant configurée pour former, par pressage, plusieurs zones de fixation dudit au moins un composant interne (30) à l'intérieur de la paraison (20),
c) déplacer la deuxième section (4) de la partie (1a, 1b) du moule (1) par rapport à la au moins une première section (3) de la partie (1a, 1b) du moule (1) pour amener le moule (1) dans une position de fermeture finale dans laquelle les deux parties (1a, 1b) du moule (1) sont fermées l'une contre l'autre en délimitant intérieurement la surface totale de moulage destinée à reproduire une forme prédéterminée du corps creux (10) à fabriquer,
d) déplacer la au moins une troisième section (18) de la partie (1a, 1b) du moule (1) par rapport à la au moins une première section (3) de la partie (1a, 1b) du moule (1) pour amener la au moins une troisième section (18) dans une position dans laquelle la troisième surface (19) de moulage presse la paraison (20) afin de réduire un volume prédéterminé à l'intérieur de la paraison (20),
e) réaliser un soufflage de la paraison (20) en plaquant ladite paraison (20) sur la surface totale de moulage du moule (1) à l'aide d'un gaz sous pression,
f) ouvrir le moule (1) pour sortir le corps creux (10) fabriqué.

## Patentansprüche

1. Form (1) zur Herstellung eines hohlen Behälterkörpers (10) aus Kunststoff für ein Kraftfahrzeug durch Extrusionsblasformen aus einem Vorformling (20), wobei der Behälter mindestens eine interne Komponente (30) aufweist, die beim Formen des hohlen Körpers (10) innerhalb des Vorformlings (20) befestigt wird, wobei die Form (1) zwei relativ zueinander bewegbare Teile (1a, 1b) aufweist, die, wenn sie gegeneinander geschlossen sind, innen eine gesamte Formfläche begrenzen, die dazu bestimmt ist, eine vorbestimmte Form des herzustellenden hohlen Körpers (10) nachzubilden, wobei mindestens eines der Teile (1a, 1b) der Form (1) aufweist:
- mindestens einen ersten Abschnitt (3, 3a, 3b) mit einer ersten Formfläche (11, 11a, 11b) zum Formen eines ersten Abschnitts des herzustellenden hohlen Körpers (10), wobei die erste Formfläche (11, 11a, 11b) mindestens einen primären Anlagebereich (5a) aufweist, der dazu eingerichtet ist, durch Pressen eine Befestigungszone der mindestens einen internen Komponente (30) innerhalb des Vorformlings (20) zu bilden,
- einen zweiten Abschnitt (4, 4a, 4b) mit einer zweiten Formfläche (12, 12a, 12b) zum Formen eines zweiten Abschnitts des herzustellenden hohlen Körpers (10), wobei der zweite Abschnitt (4, 4a, 4b) des Teils (1a, 1b) der Form (1) relativ zu dem zugeordneten mindestens einen ersten Abschnitt (3, 3a, 3b) des Teils (1a, 1b) der Form (1) zumindest zwischen einer Zwischen-Schließstellung und einer End-Schließstellung der Teile (1a, 1b) der Form (1) bewegbar ist, und
- mindestens einen dritten Abschnitt (18, 18a, 18b) mit einer dritten Formfläche (19, 19a, 19b) zum Formen eines dritten Abschnitts des herzustellenden hohlen Körpers (10), wobei die dritte Formfläche (19, 19a, 19b) mindestens einen sekundären Anlagebereich (5b) aufweist, wobei der mindestens eine dritte Abschnitt (18, 18a, 18b) des Teils (1a, 1b) der Form (1) relativ zu dem zugeordneten mindestens einen ersten Abschnitt (3, 3a, 3b) des Teils (1a, 1b) der Form (1) zumindest zwischen einer Zwischenstellung und einer Endstellung bewegbar ist, in der der mindestens eine sekundäre Anlagebereich (5b) dazu eingerichtet ist, durch Pressen ein vorbestimmtes Volumen innerhalb des Vorformlings (20) zu verringern.

2. Form (1) nach dem vorhergehenden Anspruch, wobei die erste Formfläche (11, 11a, 11b) des Teils (1a, 1b) der Form (1) dazu eingerichtet ist, sich entlang einer umschriebenen Fläche zu erstrecken, welche die dem Teil (1a, 1b) der Form (1) zugeordneten primären Anlagebereiche (5a) enthält.

3. Form (1) nach dem vorhergehenden Anspruch, wobei die umschriebene Fläche der ersten Formfläche (11, 11a, 11b) des Teils (1a, 1b) der Form (1) zumindest um die dem Teil (1a, 1b) der Form (1) zugeordneten primären Anlagebereiche (5a) der mindestens einen internen Komponente (30) herum einen vorbestimmten Randabstand aufweist, um Wellenbildungen des Materials um jede Befestigungszone herum zu begrenzen.

4. Form (1) nach dem vorhergehenden Anspruch, wobei der vorbestimmte Randabstand zumindest um die Befestigungszonen herum zwischen 1 mm und 60 mm beträgt.

5. Form (1) nach einem der Ansprüche 2 bis 4, wobei die umschriebene Fläche der ersten Formfläche (11, 11a, 11b) mindestens eines der Formteile (1a, 1b) der Form (1) mindestens 15 % der gesamten Formfläche beträgt.

6. Form (1) nach einem der vorhergehenden Ansprüche, wobei der sekundäre Anlagebereich (5b) oder mindestens einer der sekundären Anlagebereiche (5b) dazu eingerichtet ist, wenn sich der dritte Abschnitt (18, 18a, 18b) des Formteils (1a, 1b) der Form (1) in der Endstellung befindet, zwei gegenüberliegende Bereiche des Vorformlings (20) in Kontakt zu bringen, um sie lokal miteinander zu verschweißen.

7. Form (1) nach einem der vorhergehenden Ansprüche, wobei die dritte Formfläche (19, 19a, 19b) des Teils (1a, 1b) der Form (1) mehrere sekundäre Anlagebereiche (5b) aufweist.

8. Form (1) nach dem vorhergehenden Anspruch, wobei der mindestens eine dritte Abschnitt (18, 18a, 18b) des Teils (1a, 1b) der Form (1) in mehrere voneinander getrennte Unterabschnitte unterteilt ist und jeder sekundäre Anlagebereich (5b) von einem Unterabschnitt des mindestens einen dritten Abschnitts (18, 18a, 18b) des Teils (1a, 1b) der Form (1) getragen wird.

9. Form (1) nach dem vorhergehenden Anspruch, wobei die Unterabschnitte des mindestens einen dritten Abschnitts (18, 18a, 18b) des Teils (1a, 1b) der Form (1) relativ zueinander zwischen einer Zwischenstellung und der Endstellung bewegbar sind.

10. Form (1) nach einem der vorhergehenden Ansprüche, wobei jedes Teil (1a, 1b) der Form (1) mindestens einen ersten Abschnitt (3, 3a, 3b), einen zweiten Abschnitt (4, 4a, 4b) und mindestens einen dritten Abschnitt (18, 18a, 18b) aufweist.

11. Form (1) nach dem vorhergehenden Anspruch, wobei der mindestens eine erste Abschnitt (3, 3a, 3b) der Form (1) jedes Teils (1a, 1b) der Form (1) mindestens einen primären Anlagebereich (5a) aufweist, der dazu eingerichtet ist, den Vorformling (20) gegen dieselbe mindestens eine interne Komponente (30) zu drücken, um mindestens zwei unterschiedliche Befestigungszonen derselben mindestens einen internen Komponente (30) zu bilden, um dieselbe mindestens eine interne Komponente (30) beim Formen des hohlen Körpers (10) innerhalb des Vorformlings (20) zu befestigen.

12. Form (1) nach einem der Ansprüche 1 bis 9, wobei nur eines der Teile (1a, 1b) der Form (1) mindestens einen ersten Abschnitt (3, 3a, 3b), einen zweiten Abschnitt (4, 4a, 4b) und mindestens einen dritten Abschnitt (18, 18a, 18b) aufweist.

13. Form (1) nach einem der vorhergehenden Ansprüche, wobei in der End-Schließstellung der mindestens eine erste Formabschnitt (3, 3a, 3b) jedes Teils (1a, 1b) der Form (1) von seinem zugeordneten zweiten Abschnitt (4, 4a, 4b) des Teils (1a, 1b) der Form (1) umgeben ist.

14. Maschine (100) zum Extrusionsblasformen eines hohlen Behälterkörpers (10) aus Kunststoff für ein Kraftfahrzeug aus einem Vorformling, **dadurch gekennzeichnet, dass** die Maschine eine Form (1) nach einem der vorhergehenden Ansprüche aufweist.

15. Verfahren zum Extrusionsblasformen eines hohlen Behälterkörpers (10) aus Kunststoff für ein Kraftfahrzeug aus einem Vorformling (20), wobei der Behälter mindestens eine interne Komponente (30) aufweist, die beim Formen des hohlen Körpers (10) innerhalb des Vorformlings (20) befestigt wird, **dadurch gekennzeichnet, dass** das Verfahren die folgenden Schritte umfasst:
a) Einbringen der mindestens einen internen Komponente (30) und des Vorformlings (20) im geschmolzenen Zustand in eine in zwei Teile (1a, 1b) geöffnete Form (1), derart, dass die mindestens eine interne Komponente (30) von dem Vorformling (20) umgeben ist, wobei mindestens ein Teil (1a, 1b) der Form (1) mindestens einen ersten Abschnitt (3), einen zweiten Abschnitt (4) und mindestens einen dritten Abschnitt (18) aufweist, die innen jeweils eine erste Formfläche (11), eine zweite Formfläche (12) und eine dritte Formfläche (19) einer gesamten Formfläche der Form (1) begrenzen,
b) Bewegen des mindestens einen ersten Abschnitts (3) des Teils (1a, 1b) der Form (1), um die Form (1) in eine Zwischen-Schließstellung zu bringen, in der der mindestens eine erste Abschnitt (3) des Teils (1a, 1b) der Form (1) den Vorformling (20) gegen die mindestens eine interne Komponente (30) drückt, um die mindestens eine interne Komponente (30) innerhalb des Vorformlings (20) zu befestigen, wobei die erste Formfläche (11) dazu eingerichtet ist, durch Pressen mehrere Befestigungszonen der mindestens einen internen Komponente (30) innerhalb des Vorformlings (20) zu bilden,
c) Bewegen des zweiten Abschnitts (4) des Teils (1a, 1b) der Form (1) relativ zu dem mindestens einen ersten Abschnitt (3) des Teils (1a, 1b) der Form (1), um die Form (1) in eine End-Schließstellung zu bringen, in der die beiden Teile (1a, 1b) der Form (1) gegeneinander geschlossen sind und innen die gesamte Formfläche begrenzen, die dazu bestimmt ist, eine vorbestimmte Form des herzustellenden hohlen Körpers (10) nachzubilden,
d) Bewegen des mindestens einen dritten Abschnitts (18) des Teils (1a, 1b) der Form (1) relativ zu dem mindestens einen ersten Abschnitt (3) des Teils (1a, 1b) der Form (1), um den mindestens einen dritten Abschnitt (18) in eine Stellung zu bringen, in der die dritte Formfläche (19) den Vorformling (20) presst, um ein vorbestimmtes Volumen innerhalb des Vorformlings (20) zu verringern,
e) Durchführen eines Blasformens des Vorformlings (20), indem der Vorformling (20) mittels eines unter Druck stehenden Gases an die gesamte Formfläche der Form (1) angelegt wird,
f) Öffnen der Form (1), um den hergestellten hohlen Körper (10) zu entnehmen.

## Claims

1. A mould (1) for the blow-moulding of a hollow plastic tank body (10) for a motor vehicle from a parison (20), the tank comprising at least one internal component (30) secured inside the parison (20) during the moulding of the hollow body (10), the mould (1) comprising two parts (1a, 1b) movable relative to one another, which, when closed against one another, define internally a total moulding surface intended to reproduce a predetermined shape of the hollow body (10) to be manufactured, at least one of the parts (1a, 1b) of the mould (1) comprises:
- at least one first section (3, 3a, 3b) having a first moulding surface (11, 11a, 11b) for a first portion of the hollow body (10) to be manufactured, said first moulding surface (11, 11a, 11b) comprising at least one primary support region (5a) configured to form, by pressing, a fixing zone for said at least one internal component (30) inside the parison (20),
- a second section (4, 4a, 4b) having a second moulding surface (12, 12a, 12b) for moulding a second portion of the hollow body (10) to be manufactured, said second section (4, 4a, 4b) of the part (1a, 1b) of the mould (1) being movable relative to the at least one associated first section (3, 3a, 3b) of the mould part (1a, 1b) at least between an intermediate closing position and a final closing position of the mould parts (1a, 1b) of the mould (1), and
- at least one third section (18, 18a, 18b) having a third moulding surface (19, 19a, 19b) for moulding a third portion of the hollow body (10) to be manufactured, said third moulding surface (19, 19a, 19b) comprising at least one secondary support region (5b), said at least one third section (18, 18a, 18b) of the part (1a, 1b) of the mould (1) is movable relative to the at least one first section (3, 3a, 3b) of the part (1a, 1b) of the mould (1) at least between an intermediate position and a final position in which the at least one secondary support region (5b) is configured to reduce, by pressing, a predetermined volume within the parison (20).

2. The mould (1) according to the preceding claim, wherein the first moulding surface (11, 11a, 11b) of the part (1a, 1b) of the mould (1) is configured to extend along a circumscribed surface containing the primary support regions (5a) associated with the part (1a, 1b) of the mould (1).

3. The mould (1) according to the preceding claim, wherein the circumscribed surface of the first moulding surface (11, 11a, 11b) of the (1a, 1b) of the mould (1), comprises a predetermined margin distance at least around the primary support regions (5a) of said at least one internal component (30) associated with the part (1a, 1b) of the mould (1) in order to limit material undulations around each fixing zone.

4. The Mould (1) according to the preceding claim, wherein the predetermined margin distance at least around the fixing zones is between 1 mm and 60 mm.

5. The mould (1) according to any one of claims 2 to 4, wherein the circumscribed area of the first moulding surface (11, 11a, 11b) of at least one of the parts (1a, 1b) of the mould (1) is at least equal to 15 % of the total moulding area.

6. The mould (1) according to any one of the preceding claims, wherein the secondary support region (5b) or at least one of the secondary support regions (5b) is configured such that, when the third section (18, 18a, 18b) of the mould part (1a, 1b) of the mould (1) is in its final position, bring two opposing regions of the parison (20) into contact so as to locally weld them together.

7. The mould (1) according to any one of the preceding claims, wherein the third moulding surface (19, 19a, 19b) of the part (1a, 1b) of the mould (1) comprises a plurality of secondary support regions (5b).

8. The mould (1) according to the preceding claim, in which the at least one third section (18, 18a, 18b) of the part (1a, 1b) of the mould (1) is divided into a plurality of subsections separated from one another, and each secondary support region (5b) is supported by a subsection of the at least one third section (18, 18a, 18b) of the part (1a, 1b) of the mould (1).

9. The mould (1) according to the preceding claim, in which the sub-sections of the at least one third section (18, 18a, 18b) of the part (1a, 1b) of the mould (1) are movable relative to one another between an intermediate position and the final position.

10. The mould (1) according to any one of the preceding claims, wherein each part (1a, 1b) of the mould (1) comprises at least one first section (3, 3a, 3b), a second section (4, 4a, 4b) and at least one third section (18, 18a, 18b).

11. The mould (1) according to the preceding claim, wherein the at least one first section (3, 3a, 3b) of the mould (1) of each part (1a, 1b) of the mould (1) comprises at least one primary support region (5a) configured to support the parison (20) against said at least one internal component (30) in order to form at least two different fixing zones of said at least one internal component (30) for fixing said at least one internal component (30) inside the parison (20) during the moulding of the hollow body (10).

12. The mould (1) according to any one of claims 1 to 9, in which only one of the parts (1a, 1b) of the mould (1) comprises at least a first section (3, 3a, 3b), a second section (4, 4a, 4b) and at least a third section (18, 18a, 18b).

13. The mould (1) according to any one of the preceding claims, wherein, in the final closed position, the at least one first section (3, 3a, 3b) of each mould part (1a, 1b) of the mould (1) is surrounded by its associated second section (4, 4a, 4b) of the mould part (1a, 1b) of the mould (1).

14. A machine (100) for extrusion blow-moulding a hollow plastic tank body (10) for a motor vehicle from a parison, **characterised in that** the machine comprises a mould (1) according to any one of the preceding claims.

15. A method for the extrusion blow-moulding of a hollow plastic tank body (10) for a motor vehicle from a preform (20), the tank comprising at least one internal component (30) secured inside the parison (20) during the moulding of the hollow body (10), **characterised in that** the method comprises the following steps:
a) introducing said at least one internal component (30) and the parison (20) in the molten state into a mould (1) split into two parts (1a, 1b) such that said at least one internal component (30) is surrounded by the parison (20), at least one part (1a, 1b) of the mould (1) comprising at least a first section (3), a second section (4) and at least one third section (18) defining, internally, respectively, a first moulding surface (11), a second moulding surface (12) and a third moulding surface (19) of the total moulding surface area of the mould (1),
b) moving the at least one first section (3) of the part (1a, 1b) of the mould (1) to bring the mould (1) into an intermediate closed position in which the at least one first section (3) of the part (1a, 1b) of the mould (1) presses against the parison (20) against said at least one internal component (30) in order to secure said at least one internal component (30) inside the parison (20), the first moulding surface (11) being configured to form, by pressing, several fixing zones for said at least one internal component (30) inside the parison (20),
c) moving the second section (4) of the part (1a, 1b) of the mould (1) relative to the at least one first section (3) of the part (1a, 1b) of the mould (1) to bring the mould (1) into a final closed position in which the two halves (1a, 1b) of the mould (1) are closed against one another, internally defining the total moulding surface intended to reproduce a predetermined shape of the hollow body (10) to be manufactured,
d) moving the at least one third section (18) of the part (1a, 1b) of the mould (1) relative to the at least one first section (3) of the part (1a, 1b) of the mould (1) to bring the at least one third section (18) into a position in which the third moulding surface (19) presses against the parison (20) in order to reduce a predetermined volume within the parison (20),
e) blowing the parison (20) by pressing said parison (20) against the entire moulding surface of the mould (1) using pressurised gas,
f) opening the mould (1) to remove the manufactured hollow body (10).
